# FASCICULE DE BREVET EUROPEEN

(11) **EP 1 038 977 B1**
(45) Date de publication et mention de la délivrance du brevet: **11.05.2005**
(21) Numéro de dépôt: 00400789.4
(22) Date de dépôt: 22.03.2000
(51) Int. Cl.: C21D 7/06, B24C 1/10

(54) **Dispositif de traitement de surface par impacts**
Vorrichtung zur Oberflächenbehandlung durch Aufprall
Device for treating surfaces by impingement

(30) Priorité: 23.03.1999 FR 9903592
(43) Date de publication de la demande: 27.09.2000
(73) Titulaire: Sonats - Société des Nouvelles Applications des Techniques de Surfaces, 44400 Reze (FR)
(72) Inventeur: Cheppe, Patrick, 44115 Basse Goulaine (FR); Duchazeaubeneix, Jean-Michel, 44840 Les Sorinieres (FR)
(74) Mandataire: Leszczynski, André

(56) Documents cités:
- EP-A- 0 699 775
- DE-A- 19 543 019
- FR-A- 2 086 726
- FR-A- 2 689 431
- US-A- 3 937 055
- US-A- 4 481 802
- US-A- 4 641 510

## Description

La présente invention concerne le domaine des dispositifs de traitement de surface par impacts.

Il est connu de traiter une pièce métallique par projection de grenaille d'acier dans le but, par exemple, de durcir cette pièce.

La projection de la grenaille peut s'effectuer sous l'effet d'un jet d'air comprimé au moyen d'une machine à grenailler.

L'inconvénient d'une telle machine est de nécessiter une réserve importante de grenaille et de n'être utilisable que dans un espace adapté à la récupération de la grenaille ayant rebondi sur la pièce.

On connaît également des dispositifs de traitement de surface par impacts dans lesquels la grenaille est projetée au moyen d'une sonotrode placée dans le fond d'un bol métallique dont l'ouverture est positionnée en regard et à une faible distance de la surface à traiter.

FR-A-2 689 431 divulgue un dispositif de traitement de surface par impacts comprenant un émetteur acoustique, une face vibrante et des projectilles (billes) projetés en direction de la surface à traiter. Les projectilles sont retenus dans une chambre de travail formée par des tiges entre la face vibrante et la surface à traiter.

Les dispositifs de ce type présentent l'avantage que la grenaille retourne après rebond sur la pièce vers la sonotrode pour être projetée à nouveau sur la surface à traiter.

Ainsi il n'y a pas de perte de grenaille, sous réserve toutefois que le jeu entre le bol et la pièce traitée soit suffisamment faible pour ne pas la laisser échapper.

Il est nécessaire pour initier la mise en mouvement de la grenaille d'amener cette dernière au contact de la sonotrode, ce qui pose des difficultés lorsque l'ouverture du bol doit être dirigée vers le bas pour traiter la pièce.

De plus, en raison du risque de perte de grenaille si le jeu entre la pièce traitée et le bol augmente, suite par exemple au déplacement de ce dernier, le traitement dans un environnement réglementé tel que le nucléaire est interdit.

Il existe par conséquent un besoin pour disposer d'un dispositif de traitement de surface par impacts remédiant notamment aux inconvénients précités.

La présente invention a pour objet un nouveau dispositif de traitement de surface par impacts, du type comportant une surface vibrante et au moins un projectile apte à être projeté en direction de la surface à traiter par ladite surface vibrante, ce dispositif étant caractérisé par le fait qu'il comporte des moyens de retenue pour maintenir chaque projectile prisonnier du dispositif, lorsque ce dernier s'éloigne de la surface à traiter, les projectiles restant prisonniers du dispositif en l'absence de pièce à traiter.

Grâce à l'invention, on peut aisément traiter la surface d'une pièce par impacts sans risque de perte de grenaille ou de problème de consommation de grenaille, contrairement aux dispositifs connus mentionnés plus haut.

Les projectiles sont avantageusement retenus prisonniers du dispositif indépendamment de la surface à traiter.

Dans une réalisation particulière, le dispositif comporte des moyens de guidage pour guider chaque projectile dans son mouvement avant et après rebond sur la surface vibrante.

On peut ainsi, lorsque plusieurs projectiles sont utilisés, guider ces derniers de manière à éviter les chocs entre eux et optimiser la trajectoire des projectiles entre la surface vibrante et la surface à traiter.

Dans une réalisation particulière, le dispositif comporte des moyens d'entraînement pour déplacer les moyens de guidage par rapport au reste du dispositif.

Ces moyens d'entraînement permettent avantageusement d'homogénéiser la répartition des points d'impacts sur la surface à traiter et d'homogénéiser l'usure de la sonotrode.

Dans une réalisation particulière, chaque projectile coulisse dans un moyen de guidage.

Dans une autre réalisation particulière, chaque projectile pivote autour d'un axe entre la position où il vient buter sur la surface vibrante et celle où il vient buter sur la pièce à traiter.

Toujours dans une réalisation particulière, le dispositif comporte des moyens de rappel pour initier le mouvement de chaque projectile en l'amenant au contact de la surface vibrante, quelle que soit l'orientation du dispositif.

Dans une réalisation particulière, les moyens de rappel comportent au moins une chambre dans laquelle de l'air peut être envoyé ou aspiré pour repousser ou aspirer chaque projectile en direction de la surface vibrante.

Dans une réalisation particulière, les moyens de retenue sont agencés pour laisser chaque projectile percuter directement la surface à traiter.

Dans une variante de réalisation, les moyens de retenue sont agencés pour recevoir l'énergie cinétique de chaque projectile et la transmettre localement à la surface à traiter.

La masse de chaque projectile est comprise par exemple entre 0,1 et 5 g.

L'invention présente l'avantage de permettre l'utilisation d'une faible quantité de projectiles.

Ainsi, il est possible par exemple d'utiliser comme projectiles des billes de haute qualité, du type roulement à billes. Ce type de projectile permet de garantir la maîtrise et la reproductibilité des effets matière souhaités.

Dans une réalisation particulière, le dispositif comporte une pluralité de projectiles se présentant chacun sous la forme d'une broche ou sphérile ainsi que des moyens de guidage se présentant sous la forme d'une pièce guide comportant une pluralité de logements pour guider en coulissement lesdites broches ou sphériles.

Par sphérile, il faut comprendre un cylindre pouvant être étagé et dont l'une ou les deux extrémités arrondies sont sensiblement hémisphériques, sans zone plate.

Une bille peut être assimilée à un sphérile dont la hauteur des génératrices serait nulle.

Dans une réalisation particulière, les broches ou sphériles sont munis chacun d'un épaulement et les logements de la pièce guide comportent chacun un épaulement servant de butée de fin de course pour la broche ou sphérile associé.

Dans une réalisation particulière, la pièce guide comporte une chambre agencée pour amener de l'air comprimé sur l'avant des épaulements des broches ou sphériles afin de les repousser vers l'arrière en direction de la surface vibrante.

Cette chambre est délimitée par exemple à l'arrière par le corps de la pièce guide et à l'avant par un couvercle perforé rapporté sur le corps de la pièce guide.

Dans une réalisation particulière, la pièce guide est montée en rotation autour d'un axe géométrique de rotation parallèle à la direction de coulissement des broches ou sphériles.

Toujours dans une réalisation particulière, les broches ou sphériles sont réalisés par insertion d'une tige dans un manchon de moindre longueur que la tige.

En variante, les broches ou sphériles sont monoblocs.

Dans une autre réalisation particulière, les moyens de retenue sont constitués par un tapis de billes et le dispositif comporte au moins un projectile constitué par une bille libre d'effectuer des rebonds successifs entre la surface vibrante et le tapis de billes.

De préférence, le tapis de billes comporte des billes montées avec jeu sur des fils de support.

Dans une autre réalisation particulière, les moyens de retenue sont constitués par des broches ou sphériles mobiles dans une paroi en forme de dôme, ces broches présentant une extrémité apte à percuter la surface à traiter, les projectiles étant constitués par des billes guidées dans des canaux pour effectuer des mouvements de va-et-vient entre la surface vibrante et l'autre extrémité des broches ou sphériles.

Dans une réalisation particulière, les projectiles sont prisonniers d'un ensemble de guidage monté de manière amovible sur le dispositif, ce qui permet de changer aisément de projectiles en fonction de la surface à traiter.

Dans une variante de réalisation, le dispositif comporte une enceinte ouverte en direction de la surface à traiter et les moyens de retenue comportent des moyens permettant de générer une dépression dans cette enceinte lorsque cette dernière s'éloigne de la surface à traiter au-delà d'une distance prédéterminée, de façon à aspirer les projectiles et les empêcher de quitter le dispositif.

Ainsi, les projectiles ne quittent pas le dispositif.

Avantageusement, le dispositif comporte une chambre de récupération des projectiles, communiquant avec l'enceinte précitée et dans laquelle sont aspirés les projectiles lorsque l'enceinte s'éloigne de la surface à traiter au-delà d'une distance prédéterminée.

De préférence, le dispositif comporte en outre des moyens permettant d'expulser les billes contenues dans la chambre de récupération vers l'enceinte lorsque cette dernière est suffisamment proche de la surface à traiter pour que les projectiles soient empêchés de s'échapper.

Dans une réalisation particulière, le bord de l'enceinte venant en regard de la surface à traiter est muni d'au moins un détecteur apte à changer d'état lorsque la distance entre le bord de l'enceinte et la surface à traiter franchit une valeur prédéterminée.

De préférence, le bord de l'enceinte est muni de plusieurs détecteurs, afin de s'assurer que l'enceinte est suffisamment proche, sur l'ensemble de son pourtour, de la surface à traiter lorsque les projectiles sont envoyés dans l'enceinte.

L'invention a encore pour objet un dispositif portable de traitement de surface par impacts, caractérisé par le fait qu'il comporte une sonotrode et une pluralité de projectiles se présentant sous la forme de broches ou sphériles montés coulissantes séparément ou non dans une pièce guide, cette dernière étant solidaire de moyens de préhension permettant à l'utilisateur de la positionner manuellement en regard de la pièce à traiter, la pièce guide étant agencée et positionnée par rapport à la sonotrode pour d'une part permettre aux broches ou sphériles d'effectuer des mouvements de va-et-vient entre la sonotrode et la pièce à traiter par rebonds successifs sur ces dernières et d'autre part retenir les broches ou sphériles en l'absence de pièce à traiter.

Un tel dispositif permet de traiter d'une manière aisée *in situ* une pièce, sans crainte de perte de grenaille, ce qui est très avantageux par rapport aux dispositifs connus.

L'invention a encore pour objet un ensemble de projectiles pour un dispositif tel que défini plus haut.

L'invention a encore pour objet l'utilisation d'un dispositif tel que défini plus haut pour modifier *in situ* la forme d'une pièce en vue de son intégration dans un ensemble.

L'invention a encore pour objet l'utilisation du dispositif tel que défini plus haut pour réaliser *in situ* un traitement de surface et créer un état de surface spécifique. Ce traitement peut consister par exemple à traiter une pièce fissurée réparée par apport de matière ou à redresser de façon très rapide une pièce en chaudronnerie ou encore à conformer une pièce.

L'invention s'applique au traitement de tous types de pièces mécaniquement sollicitées telles que des pièces de moteur, de structure, de liaison ou des assemblages soudés.

L'invention sera mieux comprise à la lecture de la description détaillée qui va suivre, d'exemples non limitatifs de mise en oeuvre, et à l'examen du dessin annexé sur lequel :
- la figure 1 est une vue schématique en coupe axiale d'un dispositif conforme à un premier exemple de réalisation selon l'invention,
- la figure 2 est une vue schématique et partielle en coupe axiale d'un dispositif conforme à un deuxième exemple de réalisation de l'invention,
- la figure 3 est une vue schématique et partielle en coupe axiale d'un dispositif conforme à un troisième exemple de réalisation de l'invention,
- la figure 4 est une vue schématique et partielle en coupe axiale d'un dispositif conforme à un quatrième exemple de réalisation de l'invention,
- la figure 5 est une vue de dessus selon la flèche V de la figure 4,
- la figure 6 est une vue schématique et partielle en coupe axiale d'un dispositif conforme à un cinquième exemple de réalisation de l'invention,
- la figure 7 représente un détail de réalisation de la figure 6,
- la figure 8 représente isolément un projectile du dispositif de la figure 1,
- la figure 9 représente un détail de réalisation du tapis de billes de la figure 2,
- les figures 10 et 11 illustrent un sixième exemple de réalisation de l'invention,
- la figure 12 représente en coupe axiale une broche ou sphérile réalisée par usinage monobloc,
- la figure 13 illustre une variante de réalisation utilisant des broches ou sphériles telles que celle représentée sur la figure 12,
- la figure 14 représente un projectile conforme à une variante de réalisation,
- les figures 15 et 16 illustrent un septième exemple de réalisation de l'invention.

Les dispositifs de traitement décrits dans la suite sont destinés à traiter la surface S d'une pièce P, dans le but par exemple :
- d'augmenter la dureté superficielle de la pièce,
- de créer des contraintes résiduelles superficielles destinées à accroître la durée de vie de cette pièce,
- de déformer ou conformer la pièce,
- de créer un état de surface particulier,
- d'augmenter la densité en surface de la pièce, notamment lorsque celle-ci est poreuse, et/ou
- d'augmenter la résistance à la corrosion.

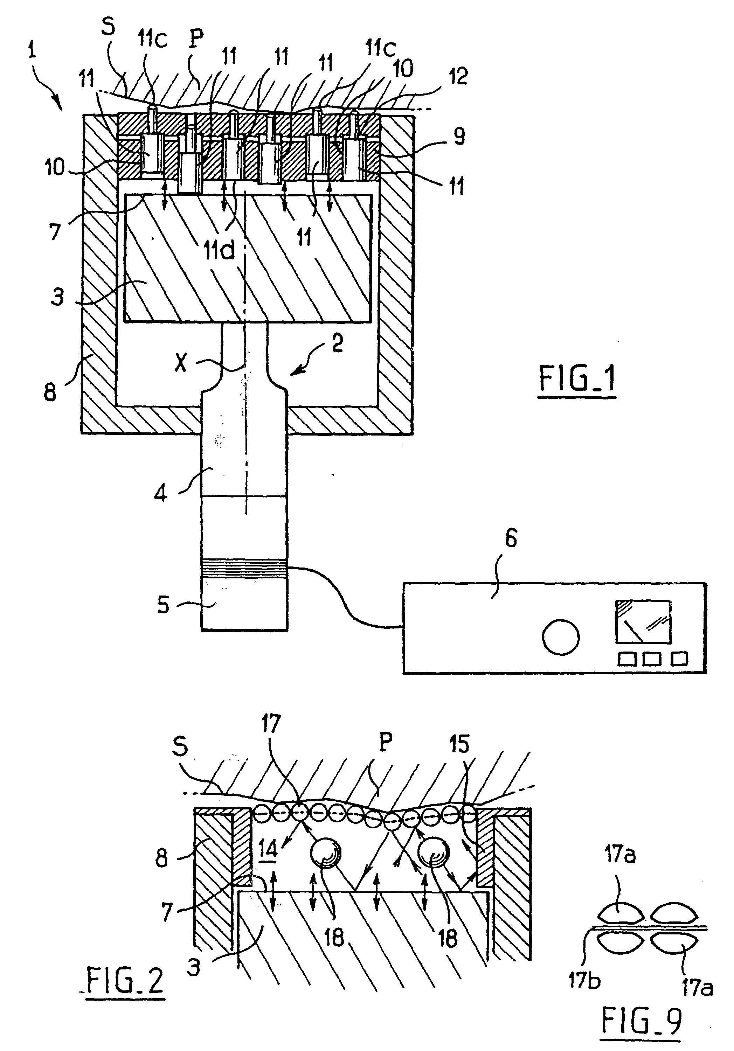

Le dispositif 1 représenté sur la figure 1 comporte un ensemble acoustique 2 d'axe longitudinal X.

Cet ensemble acoustique 2 comprend une sonotrode métallique 3 assujettie à un émetteur piézoélectrique 5 par l'intermédiaire d'un ou plusieurs éléments amplificateurs acoustiques 4 présentant d'une façon connue en soi un profil adapté à amplifier l'amplitude des oscillations selon l'axe X.

L'ensemble acoustique 2 est assujetti par une ou plusieurs zones de fixation constituant des noeuds de vibration à un bâti 8 entourant latéralement la sonotrode 3 et dépassant vers l'avant cette dernière pour permettre la fixation d'une pièce guide 9 servant au guidage d'une pluralité de projectiles 11, comme cela sera précisé plus loin.

L'émetteur piézo-électrique 5 est raccordé électriquement à un générateur électrique 6 connu en lui-même, qui génère un courant alternatif dont la fréquence est comprise entre 5 et 20 kHz, étant de l'ordre de 10 kHz dans l'exemple décrit.

L'ensemble acoustique 2 est conçu ici pour avoir une fréquence propre de résonance de l'ordre de 20 kHz pour le mode de vibration selon l'axe X.

La fréquence du courant délivré par le générateur 6 est ajustable de manière à pouvoir la rendre précisément égale à la fréquence propre de résonance de l'ensemble acoustique 2 et d'optimiser l'amplitude de vibration de la face d'extrémité libre de la sonotrode 3. La puissance délivrée au générateur permet d'augmenter où de diminuer l'amplitude de vibration de la face d'extrémité libre de la sonotrode 3.

L'extrémité de la sonotrode 3 constitue une surface vibrante 7 qui sert à projeter les projectiles 11 vers la surface à traiter.

Les projectiles 11 sont montés dans l'exemple décrit à coulissement chacun selon une direction parallèle à l'axe X dans un logement traversant 10 de la pièce guide 9.

Chaque logement 10 est symétrique de révolution et présente un épaulement 12.

Les logements 10 peuvent présenter un positionnement aléatoire sur la pièce guide 9.

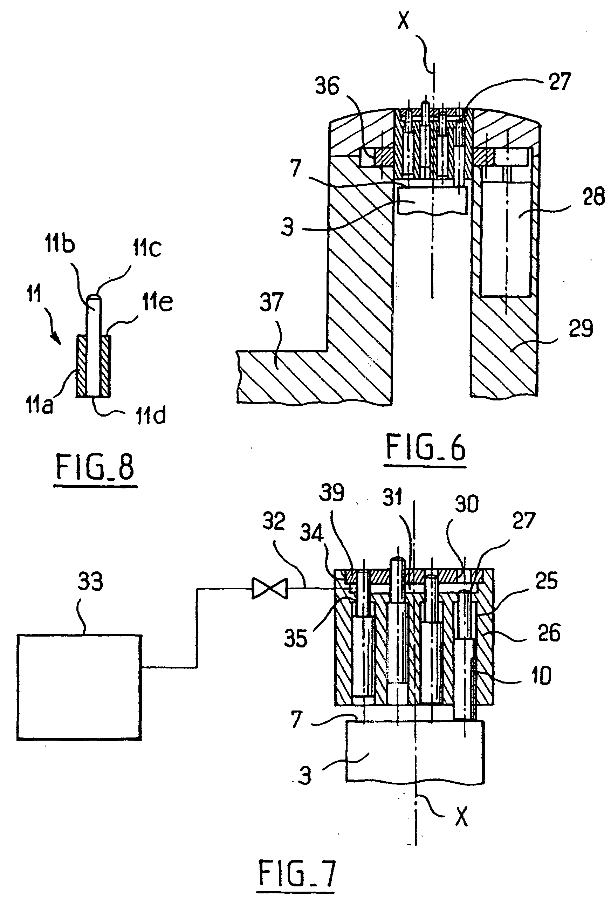

On a représenté isolément sur la figure 8 un projectile 11.

Comme on peut le voir sur cette figure, ce projectile 11 se présente dans l'exemple décrit sous la forme d'une broche ou sphérile réalisé en insérant à force dans un manchon métallique 11a cylindrique de révolution une tige métallique 11b, la longueur de cette tige étant supérieure à celle du manchon 11a, de sorte que l'extrémité avant 11c de la tige 11b puisse faire saillie à l'extérieur de la pièce guide 9 lorsque l'épaulement 11e défini par l'extrémité avant du manchon 11a vient en butée contre l'épaulement 12 du logement 10 associé.

On peut avantageusement utiliser pour constituer la tige 11b un rouleau fabriqué initialement pour servir à la réalisation de roulements.

Pour une énergie donnée transmise à la surface, la forme et la masse du projectile sont choisies en fonction de la géométrie des pièces à traiter.

La forme de l'extrémité avant 11c de la tige 11b est choisie en fonction de l'empreinte que l'on souhaite laisser sur la pièce P après impact.

Lorsque l'extrémité avant 11c est sphérique comme dans l'exemple de réalisation décrit, le rayon de courbure est choisi en fonction de la profondeur de la pièce P que l'on désire affecter lors d'un impact.

On choisit par exemple pour la face arrière 11d du projectile 11 une surface sphérique ou plane, le rayon de courbure étant par exemple supérieur à 0,5 mm.

Les extrémités avant 11c et arrière 11d du projectile peuvent recevoir un traitement de surface en vue de les durcir et améliorer le rebond sur la pièce à traiter et la sonotrode 3.

Dans l'exemple de réalisation décrit, chaque projectile est réalisé par assemblage de deux éléments mais on ne sort pas du cadre de la présente invention en réalisant chaque projectile 11 sous la forme d'une pièce monobloc.

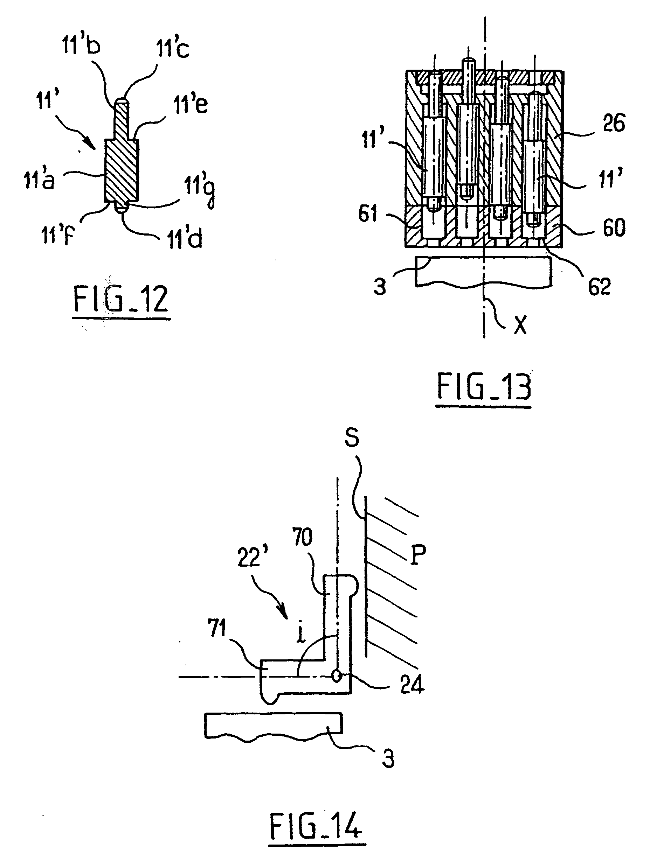

A titre d'exemple, on a représenté sur la figure 12 un projectile 11' monobloc, réalisé par usinage.

Ce projectile 11' comporte un corps cylindrique 11'a présentant deux épaulements 11'e et 11'f à ses deux extrémités axiales et des portions cylindriques 11'b et 11'g de plus petit diamètre que le corps 11'a au-delà de ces épaulements.

Les extrémités axiales 11'c et 11'd du projectile 11' sont arrondies dans toutes les directions et présentent dans l'exemple décrit une forme sensiblement hémisphérique.

Dans une variante de réalisation non représentée, les épaulements 12 pourraient être coniques et la forme des broches adaptée en conséquence.

La pièce guide 9 est positionnée par rapport à la surface vibrante 7 de telle sorte qu'aucun projectile 11 ne puisse quitter son logement 10 lorsque son extrémité arrière 11d vient au contact de la sonotrode 3.

Le fonctionnement du dispositif 1 est le suivant.

Après que l'extrémité arrière 11d de chaque projectile 11 ait été amenée au contact de la surface vibrante 7, les vibrations de la sonotrode 3 projettent les projectiles 11 vers la pièce P à traiter, dont la surface S est positionnée à une faible distance ou au contact de la pièce guide 9.

Les projectiles 11 viennent frapper par leur extrémité avant 11c la surface S et lors des impacts leur énergie cinétique est transformée en chaleur par frottement ainsi qu'en énergie de déformation plastique et élastique.

Les projectiles 11 rebondissent sur la pièce P et il se crée un mouvement de va-et-vient des projectiles entre la sonotrode 3 et la pièce P durant le traitement de la surface S.

Le dispositif 1 qui vient d'être décrit présente de nombreux avantages par rapport aux dispositifs connus utilisant de la grenaille, et notamment :
- il n'y a pas de perte d'énergie par choc des projectiles entre eux, d'où une plus grande efficacité du traitement,
- il n'y a pas de risque de perte des projectiles,
- le trajet des projectiles entre la sonotrode et la pièce à traiter s'effectue en ligne droite, ce qui permet de diminuer le temps mort entre deux impacts successifs d'un même projectile sur la surface à traiter et de ce fait d'optimiser l'intensité et la durée de traitement,
- la masse du projectile peut être choisie plus ou moins importante en jouant par exemple sur la longueur du manchon 11a ou celle de la tige 11b, sans modification de la forme de la surface réalisant l'impact sur la pièce à traiter.

On a représenté sur la figure 2 un deuxième exemple de réalisation d'un dispositif conforme à l'invention.

Ce dispositif diffère du précédent par le fait que le bâti 8 sert ici à la fixation d'une bague 15 dont l'ouverture est fermée par un tapis de billes 17 servant à retenir des projectiles 18.

Ces projectiles 18 sont constitués ici par des billes libres de se déplacer dans l'espace 14 délimité axialement par le tapis de billes 17 et la sonotrode 3 et latéralement par le bâti 8.

Les projectiles 18 sont mis en mouvement par les vibrations de la sonotrode 3 et effectuent de multiples rebonds entre la surface vibrante 7 et le tapis de billes 17.

Les billes du tapis 17 répercutent localement l'énergie cinétique des projectiles 18 sur la surface S de la pièce P à traiter.

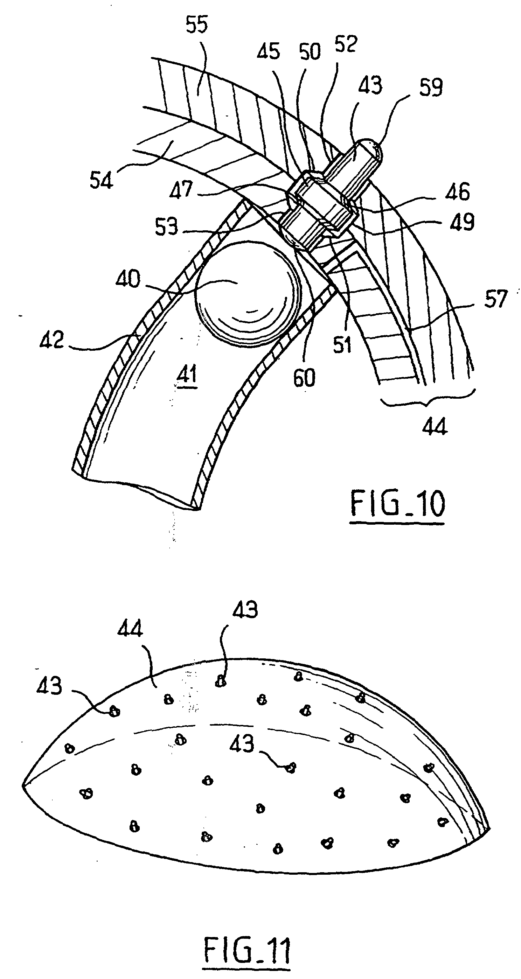

On a représenté sur la figure 9 deux billes 17a du tapis de billes 17.

Les billes 17a sont maintenues par tout moyen de fixation approprié, par exemple au moyen de fils de support 17b autour desquels elles sont montées avec jeu, comme illustré.

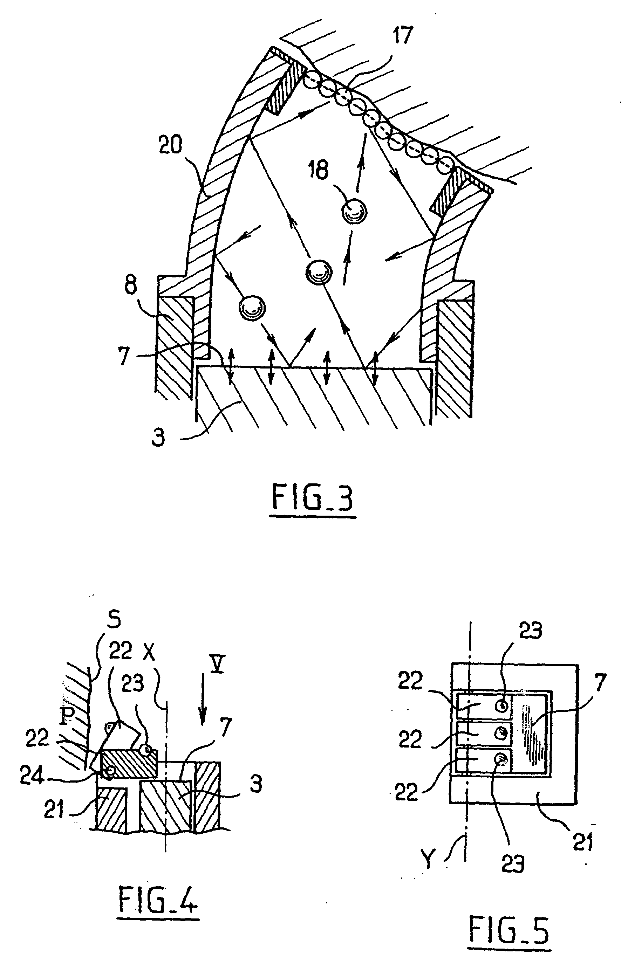

L'exemple de la figure 3 diffère de celui de la figure 2 par le fait que la bague 15 est assujettie au bâti 8 par l'intermédiaire d'un embout coudé 20.

Cet embout coudé 20 est utilisé lorsque pour des raisons d'encombrement le dispositif de traitement ne peut pas être positionné avec l'axe longitudinal X orienté sensiblement perpendiculairement au plan de la surface S à traiter.

On a représenté sur la figure 4 une variante de réalisation dans laquelle le bâti entourant la sonotrode 3, référencé ici 21, est agencé pour supporter un axe 24 servant à l'articulation d'une pluralité de masselottes 22 formant projectiles, autour d'un axe géométrique de rotation Y perpendiculaire au plan de la figure 4.

Chaque masselotte 22 présente dans cet exemple un corps ayant une forme générale parallélépipédique, articulé sur l'axe 24 au voisinage du coin inférieur gauche et pouvant prendre appui par le coin inférieur droit sur la surface vibrante 7, comme on peut le voir sur la figure 4.

Chaque masselotte 22 comporte en outre dans le coin supérieur droit une excroissance 23, apte à percuter par son sommet la surface S de la pièce P traiter.

Pendant le fonctionnement, chaque masselotte 22 effectue un mouvement de va-et-vient entre la surface S de la pièce P et la sonotrode 3.

Le montage à pivotement des masselottes 22 permet de traiter la pièce P avec l'axe longitudinal X du dispositif orienté sensiblement parallèlement à la surface S à traiter, ce qui peut s'avérer avantageux pour des raisons d'encombrement.

On a représenté sur la figure 14 une variante de réalisation dans laquelle les masselottes 22 sont remplacées par des masselottes 22' comprenant deux bras 70 et 71 faisant un angle i entre eux pouvant être quelconque, par exemple égal à 90° comme dans l'exemple décrit.

Les bras comportent des excroissances 73 et 74 agencées pour percuter respectivement la sonotrode 3 et la surface à traiter S.

On a représenté sur les figures 6 et 7 une variante de réalisation dans laquelle les projectiles 11 se présentent sous la forme de broches identiques à celles du dispositif décrit plus haut en référence à la figure 1, ces projectiles 11 étant guidés à coulissement parallèlement à l'axe X dans des logements 25 d'une pièce guide 26, ces logements 25 pouvant avantageusement, comme dans l'exemple décrit, être positionnés aléatoirement sur la pièce guide 26. A la différence du dispositif de la figure 1, la pièce guide 26 est ici montée à rotation autour de l'axe X et entraînée autour de cet axe par un système d'engrenages 36 accouplé à un moteur électrique 28 logé dans l'épaisseur de la paroi du bâti entourant la sonotrode 3, référencé 29.

Les logements 25 sont munis chacun d'un épaulement 35 pour retenir le projectile 11 associé.

Le corps de la pièce guide 26 comporte à son extrémité avant un renfoncement 27 qui est étagé à sa périphérie 34 pour permettre le montage d'un couvercle 39 pourvu de perçages 30 pour le passage des tiges 11b des projectiles.

Le couvercle 39 ménage avec le fond du renfoncement 27 une chambre 31 dans laquelle de l'air comprimé provenant d'une canalisation 32 reliée à un compresseur 33, représenté très schématiquement sur la figure 7, peut être insufflé.

Cette arrivée d'air comprimé dans la chambre 31 permet de repousser les projectiles 11 vers l'arrière pour les amener au contact de la surface vibrante 7, laquelle leur communiquera l'impulsion initiale en direction de la surface à traiter.

On peut ainsi initier le mouvement des projectiles quelle que soit l'orientation du dispositif et notamment lorsque la pièce guide 26 est dirigée vers le bas.

L'air comprimé permet également de refroidir le corps de la pièce guide 26, le couvercle 39, la sonotrode 3 et les projectiles 11 au cours du fonctionnement du dispositif.

Dans une variante non illustrée, on utilise une dépression pour aspirer les projectiles et les déplacer en direction de la sonotrode, à la place d'une surpression comme décrit ci-dessus.

Cette dépression est créée entre la pièce guide 26 et la sonotrode 3.

L'entraînement en rotation de la pièce guide 26 par le moteur 28 au cours du fonctionnement du dispositif et le positionnement aléatoire des logements 25 empêchent les projectiles de frapper deux fois de suite au même endroit la sonotrode 3 ou la surface S de la pièce P à traiter si le bâti 29 est immobile, ce qui permet d'homogénéiser la répartition des impacts sur la surface S. Cela permet également d'homogénéiser l'usure de la sonotrode 3.

On a référencé 37 un prolongement du bâti 29 constituant un moyen de préhension qui n'est pas représenté dans sa totalité et qui permet à un utilisateur d'effectuer et de contrôler manuellement l'opération de traitement.

On a illustré sur les figures 10 et 11, un sixième exemple de mise en oeuvre de l'invention.

Dans cet exemple de réalisation, les projectiles sont constitués par des billes 40 guidées dans des canaux individuels 41 formés par des tubes 42.

Chaque bille 40 effectue des mouvements de va-et-vient dans le tube 42 correspondant entre la surface vibrante disposée à une extrémité du tube et l'autre extrémité où se trouve une broche 43 mobile dans une pièce guide 44, en forme de dôme, comme représenté très schématiquement sur la figure 11.

Les axes des broches sont orientés comme des rayons de la paroi 44.

Chaque broche 43 comporte un corps cylindrique pourvu à mi-longueur environ d'un renflement annulaire 45, ce dernier étant bordé axialement par des épaulements coniques 46 et 47.

Le renflement 45 est reçu dans une chambre 49 de la paroi 44, délimitée axialement par deux épaulements coniques 50 et 51 contre lesquels peuvent venir buter respectivement les épaulements 46 et 47 de la broche 43.

Dans une variante non représentée, les épaulements 50 et 51 pourraient être droits et la forme des broches 43 adaptée en conséquence.

La distance séparant les épaulements 50 et 51 autorise une certaine mobilité axiale de la broche 43 selon son axe.

La chambre 49 débouche d'une part à l'extérieur de la paroi 44 par un perçage 52 et d'autre part sur le tube 42 par un perçage 53, le diamètre des perçages 52 et 53 étant légèrement supérieur à celui des parties cylindriques de la broche 43 situées de part et d'autre du renflement 45.

La paroi 44 est formée dans l'exemple de réalisation décrit par l'assemblage de parois intérieure 54 et extérieure 55 l'une contre l'autre, ces parois étant solidarisées après la mise en place des broches 43.

La paroi intérieure 54 est creusée sur sa face venant au contact de la paroi extérieure pour définir des canaux 57 permettant d'acheminer de l'air comprimé au niveau de l'extrémité du tube 42 débouchant sur la broche 43, afin de repousser la bille 40 vers la sonotrode et initier les rebonds successifs.

Ce mode de réalisation présente l'avantage de permettre le traitement d'une surface de géométrie complexe avec des rayons de raccordement par exemple.

Lors de l'utilisation, la bille 40 effectue des rebonds successifs entre la sonotrode et l'extrémité intérieure 60 de la broche 43, transmettant à cette dernière son énergie cinétique.

La surface à traiter est percutée par l'extrémité extérieure 59 de la broche 43.

On a représenté sur la figure 13 une variante de réalisation du dispositif de la figure 7, visant à illustrer la possibilité de maintenir les projectiles prisonniers d'un ensemble de guidage amovible visant à faciliter le remplacement des projectiles.

On peut réaliser une gamme d'ensembles de guidage, chaque ensemble de guidage étant muni d'un type donné de projectile.

On choisit alors l'ensemble de guidage parmi cette gamme en fonction du traitement à effectuer.

On peut disposer les ensembles de guidage sur un barillet, lequel permet alors un changement rapide des projectiles utilisés en fonction de la surface traitée.

Dans l'exemple de la figure 13, l'ensemble de guidage loge des projectiles 11' et comporte une pièce de retenue 60 fixé sur la pièce guide 26 de l'exemple de réalisation de la figure 7.

La pièce de retenue 60 comporte des alésages 61 avec des épaulements 62.

La profondeur des alésages 61 est choisie de telle sorte que les extrémités inférieures 11'd des projectiles 11' puissent atteindre la sonotrode 3 avant que les épaulements 11'f ne viennent en butée contre les épaulements 62.

Dans tous les exemples de réalisation décrits, en l'absence de pièce à traiter, les projectiles restent prisonniers du dispositif.

Bien entendu, l'invention n'est pas limitée aux exemples de réalisation qui viennent d'être décrits, dont les particularités de réalisation peuvent être combinées de multiples manières.

On peut notamment entraîner la pièce guide non pas en rotation comme dans l'exemple des figures 6 et 7 mais en translation dans une ou deux directions d'un plan, avec des déplacements aléatoires dans chaque direction.

Le tapis de billes 17 de l'exemple de réalisation des figures 2 et 3 peut être remplacé par toute autre paroi déformable capable de transmettre localement l'énergie cinétique des projectiles à la pièce à traiter, et d'assurer le refroidissement du corps de la pièce guide 44, des tubes 42, des projectiles 40 et de la sonotrode associée, au cours du fonctionnement du dispositif.

On peut aussi, sans sortir du cadre de la présente invention, remplacer l'utilisation d'air comprimé pour amener les projectiles au contact de la surface vibrante par d'autres moyens de rappel tels que par exemple des ressorts ou des aimants.

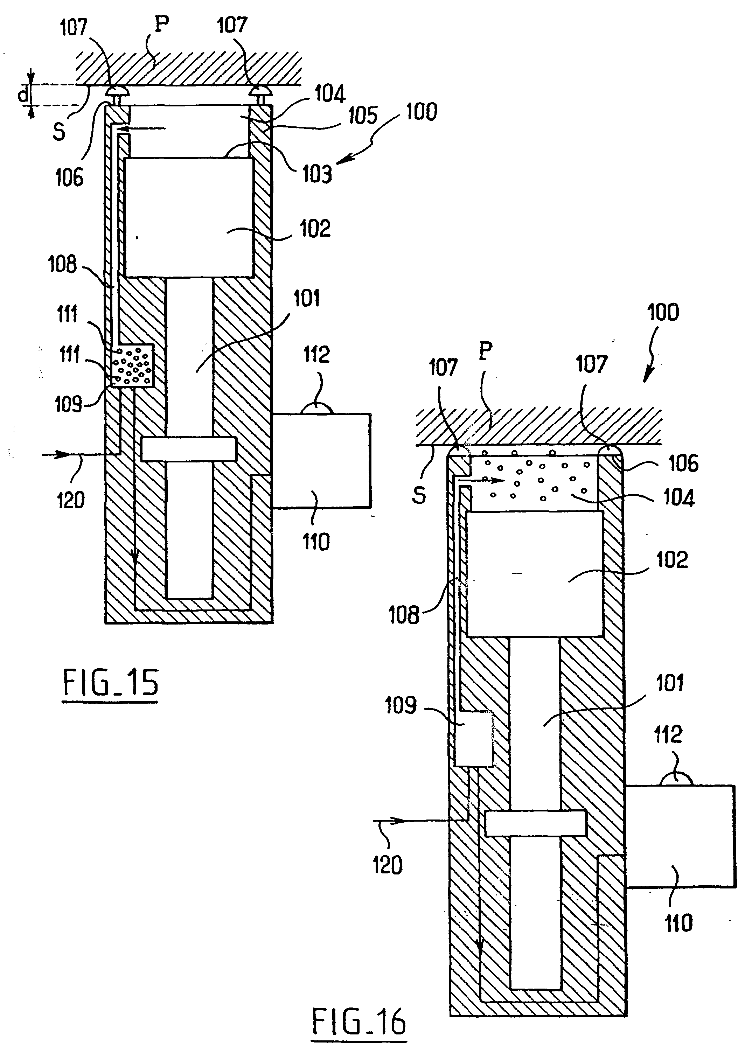

On a représenté sur les figures 15 et 16 un dispositif 100 conforme à un autre exemple de mise en oeuvre de l'invention

Ce dispositif 100 comporte un ensemble acoustique 101 accouplé à une sonotrode 102 présentant une surface vibrante 103, apte à projeter des projectiles vers une surface S à traiter.

La sonotrode 102 est placée dans le fond d'une enceinte 104 délimitée latéralement par une paroi 105 dont le bord avant 106 est disposé en regard de la surface S lors de l'utilisation.

La paroi 105 est munie de contacteurs électriques 107 répartis sur la périphérie de son bord avant 106, chacun de ces contacteurs étant apte à changer d'état lorsque la distance d entre le bord avant 106 et la surface S devient inférieure à une valeur prédéterminée.

L'enceinte 104 communique par un conduit 108 avec une chambre de récupération 109 elle-même reliée à des moyens 110 permettant de générer quasi instantanément une forte dépression dans la chambre de récupération 109.

La chambre de récupération 109 communique également par un conduit 120 avec une source d'air comprimé non représentée.

La chambre de récupération 109 est apte à accueillir un ensemble de projectiles 111 constitués dans l'exemple décrit par des billes.

Le dispositif 100 comporte un contacteur électrique 112 pouvant être actionné par l'utilisateur pour commander le fonctionnement de l'ensemble acoustique 101.

Le fonctionnement du dispositif 100 est le suivant.

On suppose les projectiles 111 présents dans la chambre de récupération 109.

L'utilisateur amène l'ouverture de l'enceinte 104 en regard de la surface à traiter et rapproche le bord avant 106 de cette dernière.

L'utilisateur appuie sur le contacteur 112 pour déclencher l'excitation de la sonotrode.

Le dispositif détermine au moyen des contacteurs 107 si le bord avant 106 est suffisamment proche de la surface à traiter, afin d'éviter les fuites de billes au moment du traitement.

Si le bord avant 106 est suffisamment proche, un jet d'air comprimé est envoyé dans la chambre de récupération 109 pour chasser les billes de cette dernière et les amener dans l'enceinte 104 où elles sont alors exposées aux vibrations de la sonotrode 102 et effectuent de multiples trajets entre la surface à traiter et la sonotrode.

Si l'utilisateur éloigne le dispositif de la surface à traiter, les contacteurs 107 changent d'état et interrompent le fonctionnement de l'ensemble acoustique tout en déclenchant la création d'une dépression dans la chambre de récupération 109, ce qui permet de récupérer les billes 111 et d'éviter qu'elles ne quittent le dispositif.

La création d'une dépression pour récupérer les billes dans la chambre de récupération constitue un moyen de retenue au sens de la présente invention, qui évite la perte de projectiles.

La dépression peut être obtenue de diverses manières, par exemple au moyen d'une pompe à vide ou au moyen d'air comprimé avec un dispositif à effet VENTURI.

## Revendications

1. Dispositif de traitement de surface par impacts, comportant une sonotrode (3) et une surface vibrante (7), et au moins un projectile (11) apte à être projeté en direction de la surface à traiter (5) par ladite surface vibrante (7) sous l'effet des vibrations de la sonotrode (3), **caractérisé par le fait qu'**il comporte des moyens de retenue (9 ; 17 ; 24 ; 35 ; 43 ; 110 ; 109 ; 108) pour maintenir chaque projectile (11 ; 18 ; 22 ; 40 ; 111) prisonnier du dispositif lorsque ce dernier s'éloigne de la surface (S) à traiter, les projectiles restant prisonniers du dispositif en l'absence de pièce à traiter.

2. Dispositif selon la revendication 1, **caractérisé par le fait que** les moyens de retenue maintiennent les projectiles prisonniers du dispositif indépendamment de la surface à traiter.

3. Dispositif selon la revendication 1 ou 2, **caractérisé par le fait qu'**il comporte des moyens de guidage (9 ; 24 ; 26 ; 42) pour guider chaque projectile dans son mouvement avant et après rebond sur la surface vibrante (7).

4. Dispositif selon la revendication 3, **caractérisé par le fait qu'**il comporte des moyens d'entraînement (28 ; 36) pour déplacer les moyens de guidage (26) par rapport au reste du dispositif.

5. Dispositif selon la revendication 3 ou 4, **caractérisé par le fait que** chaque projectile (11) coulisse dans un moyen de guidage (9 ; 26 ; 42).

6. Dispositif selon la revendication 3 ou 4, **caractérisé par le fait que** chaque projectile (22) pivote autour d'un axe (24) entre la position où il vient buter sur la surface vibrante (7) et celle où il vient buter sur la pièce à traiter (P).

7. Dispositif selon l'une quelconque des revendications précédentes, **caractérisé par le fait qu'**il comporte des moyens de rappel (31 ; 32 ; 33 ; 57) pour initier le mouvement de chaque projectile (11 ; 40) en l'amenant au contact de ladite surface vibrante (7) quelle que soit l'orientation du dispositif.

8. Dispositif selon la revendication précédente, **caractérisé par le fait que** les moyens de rappel comportent au moins une chambre (31) dans laquelle de l'air peut être envoyé ou aspiré pour repousser ou aspirer chaque projectile en direction de la surface vibrante (7).

9. Dispositif selon l'une quelconque des revendications précédentes, **caractérisé par le fait que** lesdits moyens de retenue (9 ; 24 ; 35) sont agencés pour laisser chaque projectile (11 ; 22) percuter directement la surface (S) à traiter.

10. Dispositif selon l'une quelconque des revendications 1 à 8, **caractérisé par le fait que** les moyens de retenue (17 ; 43) sont agencés pour recevoir l'énergie cinétique de chaque projectile (18 ; 40) et la transmettre localement à la surface (S) à traiter.

11. Dispositif selon la revendication précédente, **caractérisé par le fait que** les moyens de retenue sont constitués par un tapis de billes (17) et **par le fait que** le dispositif comporte au moins un projectile constitué par une bille (18) libre d'effectuer des rebonds successifs entre la surface vibrante et le tapis de billes.

12. Dispositif selon la revendication précédente, **caractérisé par le fait que** le tapis de billes (17) comporte des billes (17a) montées avec jeu sur des fils de support (17b).

13. Dispositif selon la revendication 12, **caractérisé par le fait que** les moyens de retenue sont constitués par des broches ou sphériles (43) mobiles dans une paroi (44) en forme de dôme, ces broches ou sphériles présentant une extrémité (59) apte à percuter la surface à traiter, et **par le fait que** le dispositif comporte des projectiles constitués par des billes (40), guidées dans des canaux (41) pour effectuer des mouvements de va-et-vient entre la surface vibrante et l'autre extrémité (60) des broches.

14. Dispositif selon l'une quelconque des revendications précédentes, **caractérisé par le fait que** la masse de chaque projectile (11) est comprise entre 0,1 et 5 g.

15. Dispositif selon la revendication 5, **caractérisé par le fait qu'**il comporte une pluralité de projectiles (11) se présentant chacun sous la forme d'une broche ou sphérile et **par le fait que** lesdits moyens de guidage comportent une pièce guide (9 ; 26) comportant une pluralité de logements (10 ; 25) pour guider en coulissement chacune desdites broches ou sphériles.

16. Dispositif selon la revendication précédente, **caractérisé par le fait que** les broches ou sphériles (11) sont munis chacun d'un épaulement (11e).

17. Dispositif selon la revendication précédente, **caractérisé par le fait que** les logements (10 ; 25) de la pièce guide comportent des épaulements (12 ; 35) servant de butée de fin de course pour les broches ou sphériles (11).

18. Dispositif selon l'une des revendications 16 et 17, **caractérisé par le fait que** la pièce guide (26) comporte une chambre (31) agencée pour amener de l'air comprimé sur l'avant des épaulements (11e) des broches ou sphériles et les repousser vers l'arrière en direction de la surface vibrante (7).

19. Dispositif selon la revendication 18, **caractérisé par le fait que** ladite chambre (31) est délimitée à l'arrière par le corps de la pièce guide (26) et à l'avant par un couvercle perforé (29) rapporté sur le corps de la pièce.

20. Dispositif selon l'une quelconque des revendications 15 à 19, **caractérisé par le fait que** la pièce guide (26) est montée en rotation autour d'un axe (X) parallèle à la direction de coulissement des broches ou sphériles (11).

21. Dispositif selon l'une quelconque des revendications précédentes, **caractérisé par le fait que** les projectiles sont prisonniers d'un ensemble de guidage monté de manière amovible sur le dispositif.

22. Dispositif selon la revendication 1, **caractérisé par le fait qu'**il comporte une enceinte (104) ouverte en direction de la surface à traiter (S) et **par le fait que** les moyens de retenue comportent des moyens (110, 109, 108) permettant de générer une dépression dans cette enceinte lorsque cette dernière s'éloigne de la surface à traiter au-delà d'une distance (d) prédéterminée, de façon à aspirer les projectiles et les empêcher de quitter le dispositif.

23. Dispositif selon la revendication précédente, **caractérisé par le fait qu'**il comporte une chambre de récupération (109) des projectiles (111), communiquant avec l'enceinte (104) et dans laquelle sont aspirés les projectiles lorsque l'enceinte s'éloigne de la surface à traiter au-delà d'une distance prédéterminée.

24. Dispositif selon la revendication précédente, **caractérisé par le fait qu'**il comporte des moyens (120) permettant d'expulser les billes contenues dans la chambre de récupération (109) vers l'enceinte lorsque cette dernière est suffisamment proche de la surface à traiter pour que les projectiles soient empêchés de s'échapper.

25. Dispositif selon l'une des trois revendications précédentes, **caractérisé par le fait que** le bord (106) de l'enceinte venant en regard de la surface à traiter est muni d'au moins un détecteur (117) apte à changer d'état lorsque la distance (d) entre l'enceinte et la surface à traiter franchit une valeur prédéterminée.

26. Dispositif selon la revendication précédente, **caractérisé par le fait que** le bord de l'enceinte est muni de plusieurs détecteurs, afin de s'assurer que l'enceinte est suffisamment proche, sur l'ensemble de son pourtour, de la surface à traiter lorsque les projectiles sont envoyés dans l'enceinte.

27. Dispositif selon l'une quelconque des revendications précédentes, **caractérisé par le fait que** les projectiles viennent en contact avec la surface vibrante.

## Patentansprüche

1. Vorrichtung zur Behandlung von Flächen durch Stöße, wobei diese Vorrichtung eine Sonotrode (3) und eine vibrierende Oberfläche (7), sowie mindestens ein Projektil (11) umfasst, wobei das Projektil durch die vibrierende Oberfläche (7) unter der Wirkung der Vibrationen der Sonotrode (3) in Richtung der zu behandelnden Fläche (S) geschossen werden kann, sowie **dadurch gekennzeichnet, dass** die Vorrichtung Haltemittel (9; 17; 24; 35; 43; 110; 109; 108) zur Blockierung eines jeden in die Vorrichtung eingeschlossenen Projektils (11; 18; 22; 40; 111) umfasst, wenn das Projektil sich von der zu behandelnden Fläche entfernt, wobei die Projektile bei Abwesenheit eines zu behandelnden Teiles in der Vorrichtung eingeschossen bleiben.

2. Vorrichtung nach Anspruch 1, **dadurch gekennzeichnet, dass** die Haltemittel die Projektile unabhängig von der zu behandelnden Fläche in der Vorrichtung eingeschlossen halten.

3. Vorrichtung nach Anspruch 1 oder 2, **dadurch gekennzeichnet, dass** die Vorrichtung Führungsmittel (9; 24; 26; 42) zur Führung eines jeden Projektils in seiner Bewegung vor und nach jedem Aufprall auf der vibrierenden Oberfläche (7) umfasst.

4. Vorrichtung nach Anspruch 3, **dadurch gekennzeichnet, dass** die Vorrichtung Antriebsmittel (28; 36) zur Verschiebung der Führungsmittel (26) gegenüber der restlichen Vorrichtung umfasst.

5. Vorrichtung nach Anspruch 3 oder 4, **dadurch gekennzeichnet, dass** jedes Projektil (11) in einem Führungsmittel (9; 26; 42) gleitet.

6. Vorrichtung nach Anspruch 3 oder 4, **dadurch gekennzeichnet, dass** jedes Projektil (22) sich um eine Achse (24) dreht, wobei diese Achse zwischen derjenigen Position verläuft, in der das Projektil gegen die vibrierende Oberfläche (7) stößt, und derjenigen Position, in der es gegen das zu behandelnde Teil (P) stößt.

7. Vorrichtung nach einem der vorangegangenen Ansprüche, **dadurch gekennzeichnet, dass** sie Rückholmittel (31; 32; 33; 57) zur Einleitung der Bewegung eines jeden Projektils (11; 40) umfasst, wobei die Bewegung dadurch eingeleitet wird, dass die Rückholmittel unabhängig von der Ausrichtung der Vorrichtung jedes Projektil in Berührung mit der benannten vibrierenden Oberfläche (7) bringen.

8. Vorrichtung nach dem vorangegangenen Anspruch, **dadurch gekennzeichnet, dass** die Rückholmittel mindestens eine Kammer (31) umfassen, in die Luft eingeführt oder aus der Luft abgesaugt werden kann, um jedes Projektil in Richtung der vibrierenden Oberfläche (7) wegzustoßen oder anzuziehen.

9. Vorrichtung nach einem der vorangegangenen Ansprüche, **dadurch gekennzeichnet, dass** die benannten Haltemittel (9; 24; 35) derart angeordnet sind, dass jedes Projektil (11; 22) direkt auf die zu behandelnde Fläche (S) stoßen kann.

10. Vorrichtung nach einem der vorangegangenen Ansprüche 1 bis 8, **dadurch gekennzeichnet, dass** die Haltemittel (17; 43) derart angeordnet sind, dass sie die kinetische Energie eines jeden Projektils (18; 40) aufnehmen und sie lokal an die zu behandelnde Oberfläche (S) weitergeben können.

11. Vorrichtung nach einem der vorangegangenen Ansprüche, **dadurch gekennzeichnet, dass** die Haltemittel aus einer Kugelmatte (17) bestehen, und dass die Vorrichtung mindestens ein Projektil umfasst, welches aus einer Kugel (18) besteht, welche wiederholte Rückpralle zwischen der vibrierenden Oberfläche und der Kugelmatte frei ausführen kann.

12. Vorrichtung nach dem vorangegangenen Anspruch, **dadurch gekennzeichnet, dass** die Kugelmatte (17) Kugeln (17a) umfasst, welche beweglich auf Haltefäden (17b) montiert sind.

13. Vorrichtung nach Anspruch 12, **dadurch gekennzeichnet, dass** die Haltemittel aus beweglichen Stiften oder Spherilen (43) in einer Wand (44) in Kuppelform bestehen, wobei diese Stifte bzw. Spherile ein Ende (59) aufweisen, das auf die zu behandelnde Fläche aufstoßen kann, sowie **dadurch gekennzeichnet, dass** die Vorrichtung Kugeln (40) als Projektile umfasst, welche in Rinnen geführt werden, um Vor- und Rückbewegungen zwischen der vibrierenden Oberfläche und dem anderen Ende (60) der Stifte auszuführen.

14. Vorrichtung nach einem der vorangegangenen Ansprüche, **dadurch gekennzeichnet, dass** die Masse eines jeden Projektils (11) zwischen 0,1 und 5 g liegt.

15. Vorrichtung nach Anspruch 5, **dadurch gekennzeichnet, dass** sie eine Mehrzahl an Projektilen (11) umfasst, wobei diese Projektile jeweils die Form eines Stifts oder eines Spherils aufweisen, sowie **dadurch gekennzeichnet, dass** die benannten Führungsmittel ein Führungsstück (9; 26) umfassen, welches eine Mehrzahl an Einlassungen (10; 25) zur Führung der Gleitbewegung eines jeden der benannten Stifte oder Spherile umfasst.

16. Vorrichtung nach dem vorangegangenen Anspruch, **dadurch gekennzeichnet, dass** die Stifte oder Spherile (11) jeweils mit einem Bund (11e) versehen sind.

17. Vorrichtung nach dem vorangegangenen Anspruch, **dadurch gekennzeichnet, dass** die Einlassungen (10; 25) des Führungsstückes Bünde (12; 35) aufweisen, welche als Anschlag für die Stifte oder Spherile (11) dienen.

18. Vorrichtung nach einem der Ansprüche 16 und 17, **dadurch gekennzeichnet, dass** das Führungsstück (26) eine Kammer (31) umfasst, welche derart angeordnet ist, dass sie Pressluft vorne auf die Bünde (11e) der Stifte oder Spherile bläst und sie dadurch nach hinten in Richtung der vibrierenden Oberfläche (7) schieben kann.

19. Vorrichtung nach Anspruch 18, **dadurch gekennzeichnet, dass** die benannte Kammer (31) hinten durch den Körper des Führungsstückes (26), und vorne durch einen gelochten Deckel (29) begrenzt ist, welcher an den Körper des Stückes angebaut ist.

20. Vorrichtung nach einem der Ansprüche 15 bis 19, **dadurch gekennzeichnet, dass** das Führungsstück (26) rotierend um eine Achse (X) montiert ist, wobei diese Achse parallel zur Gleitrichtung der Stifte bzw. Spherile (11) verläuft.

21. Vorrichtung nach einem der vorangegangenen Ansprüche, **dadurch gekennzeichnet, dass** die Projektile in einer Führungskonstruktion eingeschlossen sind, wobei diese Konstruktion abnehmbar auf der Vorrichtung montiert ist.

22. Vorrichtung nach Anspruch 1, **dadurch gekennzeichnet, dass** sie einen Behälter (104) aufweist, welcher in Richtung der zu behandelnden Fläche (S) offen ist, sowie **dadurch gekennzeichnet, dass** die Haltemittel Mittel (110, 109, 108) umfassen, mit denen ein Unterdruck in diesem Behälter erzeugt werden kann, wenn dieser Behälter sich von der zu behandelnden Fläche über einen vorbestimmten Abstand (d) hinaus entfernt, wodurch die Projektile durch diese Mittel angesaugt werden und die Vorrichtung nicht verlassen können.

23. Vorrichtung nach dem vorangegangenen Anspruch, **dadurch gekennzeichnet, dass** sie eine Bergungskammer (109) für die Projektile (111) umfasst, welche mit dem Behälter (104) verbunden ist, wobei die Projektile in diese Bergungskammer gesaugt werden, wenn der Behälter sich über einen vorbestimmten Abstand hinaus von der zu behandelnden Fläche entfernt.

24. Vorrichtung nach dem vorangegangenen Anspruch, **dadurch gekennzeichnet, dass** sie Mittel (120) umfasst, mit denen die in der Bergungskammer (109) enthaltenen Kugeln in den Behälter ausgestoßen werden können, wenn der Behälter ausreichend nahe an der zu behandelnden Fläche ist, dass die Projektile nicht entweichen können.

25. Vorrichtung nach einem der drei vorangegangenen Ansprüche, **dadurch gekennzeichnet, dass** der Rand (106) des Behälters, welcher gegenüber der zu behandelnden Fläche liegt, mit mindestens einem Fühler (117) ausgestattet ist, welcher seinen Zustand wechseln kann, wenn der Abstand (d) zwischen dem Behälter und der zu behandelnden Fläche einen vorbestimmten Wert überschreitet.

26. Vorrichtung nach dem vorangegangenen Anspruch, **dadurch gekennzeichnet, dass** der Rand des Behälters mit mehreren Fühlern ausgestattet ist, um sicher zu stellen, dass der Behälter mit seinem Rand ringsum ausreichend nahe an der zu behandelnden Fläche ist, wenn die Projektile in den Behälter gestoßen werden.

27. Vorrichtung nach einem der vorangegangenen Ansprüche, **dadurch gekennzeichnet, dass** die Projektile in Berührung mit der vibrierenden Oberfläche kommen.

## Claims

1. Apparatus for surface treatment by impacts, comprising a sonotrode (3) and a vibrating surface (7), and at least one projectile (11) suitable for being projected towards the surface to be treated by said vibrating surface (7) under the effect of vibration of the sonotrode (3), the apparatus being **characterized by** the fact that it includes retaining means (9; 17; 24; 35; 43; 110; 109; 108) for holding each projectile (11; 18; 22; 40; 111) captive in the apparatus when said apparatus is moved away from the surface (S) to be treated, the projectiles remaining captive in the device in the absence of the part to be treated.

2. Apparatus according to claim 1, **characterized by** the fact that the retaining means hold the projectiles captive in the apparatus independently of the surface to be treated.

3. Apparatus according to claim 1 or 2, **characterized by** the fact that it includes guide means (9; 24; 26; 42) for guiding each projectile in its forward movement and after rebounding on the vibrating surface (7).

4. Apparatus according to claim 3, **characterized by** the fact that it includes drive means (28; 36) for displacing the guide means (26) relative to the remainder of the apparatus.

5. Apparatus according to claim 3 or 4, **characterized by** the fact that each projectile (11) slides in a guide means (9; 26; 42).

6. Apparatus according to claim 3 or 4, **characterized by** the fact that each projectile (22) pivots about an axis (24) between the position in which it comes into abutment against the vibrating surface (7) and the position in which it comes into abutment against the part to be treated (P).

7. Apparatus according to any preceding claim, **characterized by** the fact that it includes return means (31; 32; 33; 57) for initiating the motion of each projectile (11; 40) by bringing it into contact with said vibrating surface (7) regardless of the orientation of the apparatus.

8. Apparatus according to the preceding claim, **characterized by** the fact that the return means comprise at least one chamber (31) into which air can be delivered or from which air can be sucked to urge each projectile towards the vibrating surface (7).

9. Apparatus according to any preceding claim, **characterized by** the fact that said retaining means (9; 24; 35) are organized to allow each projectile (11; 22) to strike directly the surface (S) to be treated.

10. Apparatus according to any one of claims 1 to 8, **characterized by** the fact that the retaining means (17; 43) are organized to receive the kinetic energy from each projectile (18; 40) and to transfer it locally to the surface (S) to be treated.

11. Apparatus according to the preceding claim, **characterized by** the fact that the retaining means are constituted by a carpet of beads (17) and by the fact that the apparatus includes at least one projectile constituted by a ball (18) that is free to rebound successively between the vibrating surface and the carpet of beads.

12. Apparatus according to the preceding claim, **characterized by** the fact that the carpet of beads (17) has beads (17a) mounted with clearance on support wires (17b).

13. Apparatus according to claim 12, **characterized by** the fact that retaining means are constituted by pins or slugs (43) that are movable in a dome-shaped wall (44), said pins or slugs each having one end (59) suitable for striking the surface to be treated, and by the fact that the apparatus includes projectiles constituted by balls (40) guided in channels (41) to perform back-and-forth motion between the vibrating surface and the other ends (60) of the pins.

14. Apparatus according to any preceding claim, **characterized by** the fact that the mass of each projectile (11) lies in the range 0.1 g and 5 g.

15. Apparatus according to claim 5, **characterized by** the fact that it includes a plurality of projectiles (11) each in the form of a pin or slug, and by the fact that said guide means comprise a guide piece (9; 26) having a plurality of housings (10; 25) for slidably guiding each of said pins or slugs.

16. Apparatus according to the preceding claim, **characterized by** the fact that each pin or slug (11) is provided with a shoulder (11e).

17. Apparatus according to the preceding claim, **characterized by** the fact that the housings (10; 25) of the guide piece have shoulders (12; 35) serving as end-of-stroke abutments for the pins or slugs (11).

18. Apparatus according to claim 16 or 17, **characterized by** the fact that the guide piece (26) has a chamber (31) organized to deliver compressed air to the fronts of the shoulders (11e) of the pins or slugs and to urge them back towards the vibrating surface (7).

19. Apparatus according to claim 18, **characterized by** the fact that said chamber (31) is defined at its rear by the body of the guide piece (26) and at its front by a perforated cover (29) fitted to the body of the guide piece.

20. Apparatus according to any one of claims 15 to 19, **characterized by** the fact that the guide piece (26) is mounted to rotate about an axis (X) parallel to the sliding direction of the pins or slugs (11).

21. Apparatus according to any preceding claim, **characterized by** the fact that the projectiles are held captive by a guide assembly removably mounted on the apparatus.

22. Apparatus according to claim 1, **characterized by** the fact that it includes an enclosure (104) that is open towards the surface (S) to be treated and by the fact that the retaining means comprise means (110, 109, 108) serving to generate suction in said enclosure when the enclosure moves away from the surface to be treated by more than a predetermined distance (d), thereby sucking in the projectiles and preventing them from leaving the apparatus.

23. Apparatus according to the preceding claim, **characterized by** the fact that it includes a recovery chamber (109) for the projectiles (111), which chamber is in communication with the enclosure (104) and into which the projectiles are sucked when the enclosure moves away from the surface to be treated by more than a predetermined distance.

24. Apparatus according to the preceding claim, **characterized by** the fact that it includes means (120) enabling the balls contained in the recovery chamber (109) to be expelled into the enclosure when the enclosure is close enough to the surface to be treated to ensure that the projectiles are prevented from escaping therefrom.

25. Apparatus according to any one of the three preceding claims, **characterized by** the fact that the edge (106) of the enclosure that comes into register with the surface to be treated is provided with at least one detector (117) suitable for changing state when the distance (d) between the enclosure and the surface to be treated passes through a predetermined value.

26. Apparatus according to the preceding claim, **characterized by** the fact that the edge of the enclosure is provided with a plurality of detectors so as to ensure that the enclosure is sufficiently close to the surface to be treated around its entire periphery at the time the projectiles are sent into the enclosure.

27. Apparatus according to any of the preceding claims, **characterized by** the fact that the projectiles come into contact with the vibrating surface.
